# EUROPEAN PATENT APPLICATION

(11) **EP 4 086 929 A1**
(43) Date of publication of application: **09.11.2022**
(21) Application number: 21382420.4
(22) Date of filing: 07.05.2021
(51) Int. Cl.: H01G 2/22, H01G 4/32, H01G 4/38

(54) **CAPACITOR**

(71) Applicant: TDK Electronics AG, 81671 München (DE)
(72) Inventor: GÓMEZ, MANUEL, 29100 COÍN (ES); RODRÍGUEZ, FERNANDO, 29590 MÁLAGA (ES); ARCAS, ADRIAN, 29011 MÁLAGA (ES); WAGNER, TOMAS, 29013 MÁLAGA (ES); MONTIEL, FRANCISCO JAVIER, 29006 MÁLAGA (ES); PELÁEZ, DAVID, 29620 TORREMOLINOS (ES)
(74) Representative: Epping - Hermann - Fischer

(57) **Abstract**

A capacitor (1) for high frequency applications is described comprising
- at least two winding elements (2),
- a plurality of connecting elements (3) connecting the winding elements (2) in parallel to each other, wherein each winding element (2) is connected at least to a pair of connecting elements (3) with opposite polarity,
wherein the capacitor (1) has a reduced ESL and/or ESR as compared to conventional cylindrical film capacitors (1). Moreover, the use of the capacitor (1) in high frequency applications is described.

## Description

The present invention relates to a capacitor for high frequency applications. Moreover, the present invention relates to a use of a capacitor in high frequency applications.

Metallized film DC (Direct Voltage)-Link capacitors are critical components for many power electronics applications: renewable energies, electric vehicles, traction, motor drives, uninterruptible power supply, energy transmission, etc.

DC-Link capacitor requirements strongly depend on the parameters of the semiconductor implemented in the converter and modulation strategy. The development on semiconductors has changed the characteristics of high power converters: higher switching frequencies, higher harmonic frequencies, lighter cooling systems, higher power density, more compact designs, etc.

As a consequence, in order to work correctly in such applications, the DC-Link capacitor has to fulfill the requirements defined in table 1 inside the operation bandwidth.

**Table 1: requirements for a capacitor in high frequency applications**

| | Requirements |
|---|---|
| A | Low and stable increase of Equivalent Series Resistance (ESR) versus frequency |
| B | Low Equivalent Series Inductance (ESL) |
| C | Homogeneous internal current distribution |
| D | Internal resonance avoidance |

Real film capacitors, however, have parasitic components which must be reduced in order to meet the above requirements.

So far, this problem was solved by film capacitors based on flat windings (WO 2019/101802 A1), single windings round film capacitors with reduced height (TDK Data Sheet "Film capacitors- Power Electronic Capacitors: MKP-DC LSI", October 2013) and single winding round film capacitors with four terminals (Electronic Concepts Data Sheet "UNLYTIC ® MP3 SERIES", October 2013).

It is an object of the present disclosure to provide a capacitor with improved properties. This object is solved by the capacitor according to the independent claim.

According to a first aspect of the present disclosure, a capacitor is provided. The capacitor may have a round or cylindrical outer shape. Preferably, the capacitor is a cylindrical film capacitor. The capacitor is suited to be integrated in power electronics applications such as renewable energies, electric vehicles, traction, motor drives, uninterruptible power supply, energy transmission, or the like.

The capacitor comprises at least two winding elements, i.e. internally wound windings. Of course, the capacitor can comprise more than two winding elements, e.g. three, four, five or more winding elements. The winding elements are arranged following each other along a main longitudinal axis of the capacitor.

The capacitor further comprises a plurality of connecting elements, e.g. connection stripes. The connecting elements are adapted and arranged to connect the winding elements in parallel to each other. Each winding element is connected to at least a pair of connecting elements, e.g. two, three or more connecting elements, with opposite polarity. In other words, each winding element is connected to a connecting element with polarity A and to a further connecting element with polarity B. However, it could also be different to a pair of connecting elements. For example, the respective winding element could be connected to two connection stripes of pole A and one connection stripe of pole B.

The capacitor is configured and structured such that it has a reduced ESL and/or ESR as compared to conventional capacitors. In other words, components of the capacitor are arranged in a way and interrelate such that the capacitor has a very low ESL and/or ESR. This makes the capacitor especially suited to be integrated in high frequency applications.

According to one embodiment, the capacitor comprises a housing, in particular a metallic housing. The housing may comprise aluminum, for example. The housing has a cylindrical shape. The winding elements are arranged in the housing. Also the connecting elements are arranged (at least mainly) in the housing. The implementation of a metallic housing is optional. In an alternative embodiment, the capacitor may not comprise a metallic housing.

At least one connecting element, e.g. one, two or three connecting elements, from at least one winding element is located as close to the housing as possible. In particular, said connecting element is arranged closest possible to an inner surface of the housing. For example, a distance between the connecting element and the inner surface of the housing amounts to 0.5 mm to 2 mm. Moreover, the said at least one connecting element is arranged parallel to the housing, in particular to the inner surface of the housing.

The connecting element close to the metallic housing is electromagnetically coupled with it, producing eddy currents on the case with opposite direction to the current flowing through the connecting element. So, the electromagnetic flux created by the current flowing through the connecting element is partially cancelled, reducing the parasitic self-inductance of the connecting element. Therefore, the capacitor ESL is reduced.

According to one embodiment, the capacitor comprises at least two terminals. The terminals may be external terminals. In other words, the terminals protrude from an outer surface of the housing. The terminals have opposite polarity. That is to say one terminal comprises polarity A and the further terminal comprises polarity B. The terminals are adapted and arranged for electrically connecting the capacitor. The terminals are connected with the connecting elements. The winding elements are connected in parallel to the terminals by means of the connecting elements.

The winding elements have a different height, i.e. extension along the main longitudinal axis. In particular, the winding element which is arranged closest to the terminals (i.e. the top winding element) comprises a height which is smaller than a height of the further winding elements. For example, the height of the top winding element is between 15% and 85% of the height of the further winding elements.

The parasitic self-inductance of the top winding element is reduced due to its lower height and the reduction of its connecting elements' length (electrical connections between top winding and terminals). Therefore, since the winding elements are connected in parallel, being the inductance dominant the one with the lowest self-inductance, the capacitor ESL is highly reduced.

According to one embodiment, at least one pair of connecting elements with opposite polarities and belonging to different winding elements are located in a core of at least one winding element. In other words, two connecting elements, four connecting elements, six connecting elements or even more pairs of connecting elements, each pair having opposite polarity (i.e. one connecting element of a pair has polarity A and the other one has polarity B) are arranged in an inner hollow region of at least one winding element.

The said pair of connecting elements electrically connects different winding elements. That is to say, one of the said connecting elements may be connected to the top winding element, for example. The other one of the said connecting elements may be connected to a further winding element, e.g. the winding element succeeding the top winding element.

Alternatively or additionally, at least one pair of connecting elements with opposite polarities and belonging to the same winding element are located in the core of at least one winding element. Accordingly, the said pair of connecting elements electrically connects one winding element. That is to say, all connecting elements of the at least one pair of connecting elements may be connected to the top winding element, for example. Alternatively, all connecting elements of the at least one pair of connecting elements may be connected to a further winding element, e.g. the winding element succeeding the top winding element.

The said pair of connecting elements is arranged with parallel orientation. This means that the two connecting elements are arranged parallel with respect to one another. A distance between the pair of connecting elements is reduced such that said pair of connecting elements overlap. For example, a distance between the two connecting elements belonging to one pair may be between 0.1 mm and 3 mm.

In each pair of connecting elements, the electromagnetic flux created by the current flowing through the connecting elements is partially cancelled, reducing the parasitic self-inductance of the connecting elements. Thus, the capacitor ESL is reduced.

According to one embodiment, at least one pair of connecting elements with opposite polarities and from different winding elements are located as close as possible to the housing. In other words, two connecting elements, four connecting elements, six connecting elements or even more pairs of connecting elements, each pair having opposite polarity (i.e. one connecting element of a pair has polarity A and the other one has polarity B) are arranged closest possible to the inner surface of the housing. For example, a distance between the pair of connecting elements and the housing may be between 0.5 mm and 2 mm.

The said pair of connecting elements electrically connects different winding elements. That is to say, one of the said connecting elements may be connected to the top winding element, for example. The other one of the said connecting elements may be connected to a further winding element, e.g. the winding element succeeding the top winding element.

Alternatively or additionally, at least one pair of connecting elements with opposite polarities and belonging to the same winding element are located as close as possible to the housing. Accordingly, the said pair of connecting elements electrically connects one winding element. That is to say, all connecting elements of the at least one pair of connecting elements may be connected to the top winding element, for example. Alternatively, all connecting elements of the at least one pair of connecting elements may be connected to a further winding element, e.g. the winding element succeeding the top winding element.

The pair of connecting elements is arranged parallel to the housing, in particular to an inner surface of the housing.

Moreover, the pair of connecting elements are located at the same distance to the inner surface of the housing. That means that a distance between each of these two connecting elements and the housing is equal. For example, a distance between each of the two connecting elements and the inner surface of the housing may be between 0.5 mm and 2 mm.

Moreover, the two connecting element have the lowest possible distance between each other. A distance between the two connecting elements belonging to one pair may be between 0.1 mm and 3 mm.

Each pair of connecting elements is electromagnetically coupled by the metallic housing, producing eddy currents on the housing with opposite direction to the current flowing through the connecting elements. So, the electromagnetic flux created by the current flowing through the connecting elements is partially cancelled, reducing the parasitic self-inductance of the connecting elements. Consequently, the capacitor ESL is reduced.

According to one embodiment, the capacitor comprises two pairs of terminals. The terminals are adapted and arranged for electrically connecting the capacitor. The terminals are connected with the connecting elements.

The two pairs of terminals comprise a polarity circular layout A-B-A-B. That means that the terminals are arranged in a circular manner on an outer surface of the capacitor housing. Terminals with opposite polarities are arranged one after the other. That is to say, a terminal with polarity A is followed by a terminal with polarity B, which, in turn, is followed by a terminal with polarity A and so on. Terminals with same polarity are connected internally.

The cross section of the terminals is increased in this way and electrical distances from an input to the connecting elements and winding elements are reduced, reducing the parasitic self-inductances from input to connecting elements and winding elements. As a consequence, the capacitor ESL and ESR are reduced.

According to one embodiment, the capacitor comprises two pairs of terminals. The terminals are adapted and arranged for electrically connecting the capacitor. The terminals are connected with the connecting elements.

The two pairs of terminals comprise a polarity circular layout A-A-B-B. That means that the terminals are arranged in a circular manner on an outer surface of the capacitor housing. Terminals with same polarities are arranged one after the other. That is to say, a terminal with polarity A is arranged next to a terminal with polarity A. A terminal with polarity B is arranged next to a terminal with polarity B. Terminals with same polarity are connected internally.

Therefore, the cross section of the terminals is increased and electrical distances from an input to the connecting elements and winding elements are reduced, reducing the parasitic self-inductances from input to connecting elements and winding elements. Consequently, the capacitor ESL and ESR are reduced.

According to one embodiment, at least one pair of connecting elements with opposite polarities and from different winding elements are located on the lateral of at least one winding element. In other words, two connecting elements, four connecting elements, six connecting elements or even more pairs of connecting elements, each pair having opposite polarity (i.e. one connecting element of a pair has polarity A and the other one has polarity B) are arranged along an outer surface of at least one winding element.

The said at least one pair of connecting elements electrically connects different winding elements. That is to say, one of the said connecting elements may be connected to the top winding element, for example. The other one of the said connecting elements may be connected to a further winding element, e.g. the winding element succeeding the top winding element.

Alternatively or additionally, at least one pair of connecting elements with opposite polarities and from the same winding element are located on the lateral of at least one winding element. The said at least one pair of connecting elements electrically connects one winding element. That is to say, all connecting elements of the at least one pair of connecting elements may be connected to the top winding element, for example. Alternatively, all connecting elements of the at least one pair of connecting elements may be connected to a further winding element, e.g. the winding element succeeding the top winding element.

The pair of connecting elements is arranged with parallel orientation, i.e. parallel with respect to one another. A distance between the two connecting elements is as small as possible such that the connecting elements overlap. For example, a distance between the two connecting elements may be between 0.1 mm and 3 mm.

A distance between the housing, in particular the inner surface of the housing, and the two connecting elements may be as small as possible. For example, the distance between the two connecting elements and the housing may be between 0.5 mm and 2 mm. In that case both connecting elements may be arranged parallel to the housing, i.e. parallel to the main longitudinal axis of the capacitor / the housing.

In each pair of connecting elements, the electromagnetic flux created by the current flowing through the connecting elements is partially cancelled, reducing the parasitic self-inductance of the connecting elements. Thus, the capacitor ESL is reduced. When the pair of connecting elements is arranged as close as possible to the housing, said effect described is amplified.

According to one embodiment, at least one trio of connecting elements with opposite polarities A-B-A and from different winding elements are located as close as possible to the housing. Alternatively or additionally, at least one trio of connecting elements with opposite polarities A-B-A and from the same winding element are located as close as possible to the housing.

In other words, one, two or even more trios of connecting elements, each connecting element of one trio being connected to a different winding element, or each connecting element of one trio being connected to the same winding element, are arranged in a minimum distance with respect to the inner surface of the housing. Moreover, the said trio of connecting elements are arranged parallel to the housing. The said three connecting elements have alternating polarities. That means one of the three connecting elements has polarity A, the next one has opposite polarity B and the further one has again opposite polarity A.

The three connecting elements are located at the same distance to the inner surface of the housing. A distance between each of the three connecting elements and the inner surface of the housing may be between 0.5 mm and 2 mm. Moreover, the three connecting elements belonging to one trio are arranged with the lowest possible distance with respect to one another. For example, a distance between the three connecting elements is between 0.1 mm and 3 mm.

Each trio of connecting elements is electromagnetically coupled by the metallic housing, producing eddy currents on the housing with opposite direction to the current flowing through the connecting elements. Thus, the electromagnetic flux created by the current flowing through the connecting elements is partially cancelled, reducing the parasitic self-inductance of the connecting elements. In this way, the capacitor ESL is reduced.

According to one embodiment, at least one trio of connecting elements with opposite polarities A-B-A and from different winding elements are located in the core of at least one winding element. Alternatively or additionally, at least one trio of connecting elements with opposite polarities A-B-A and from the same winding element are located in the core of at least one winding element.

In other words, one, two or even more trios of connecting elements, each connecting element of one trio being connected to a different winding element or, each connecting element of one trio being connected to the same winding element, are arranged in an inner hollow region of at least one winding element. Moreover, the said trio of connecting elements are arranged parallel with respect to one another. The said three connecting elements have alternating polarities. That means one of the three connecting elements has polarity A, the next one has opposite polarity B and the further one has again opposite polarity A.

A distance between the three connecting elements belonging to one trio is reduced as much as possible such that said connecting elements overlap. The distance between the three connecting elements may be between 0.1 mm and 3 mm.

In each trio of connecting elements, the electromagnetic flux created by the current flowing through the connecting elements is partially cancelled, reducing the parasitic self-inductance of the connecting elements. Thus, the capacitor ESL is reduced.

It is to be understood that the above described features and refinements of the capacitor can be implemented in the capacitor individually or combined.

According to a further aspect the use of the previously described capacitor in high frequency applications is described. The above described features of the capacitor can be implemented in the capacitor individually or combined. The capacitor has a very low ESR and/or ESL. Therefore, it is optimally suited to be used in high frequency applications, e.g. renewable energies, electric vehicles, traction, motor drives, uninterruptible power supply, energy transmission or the like.

Further features, refinements and expediencies become apparent from the following description of the exemplary embodiments in connection with the figures.

In the figures, elements of the same structure and / or functionality may be referenced by the same reference numerals. It is to be understood that the embodiments shown in the figures are illustrative representations and are not necessarily drawn to scale.
Figure 1 schematically shows a simplified electrical model of a film capacitor according to the state of the art,
Figure 2 schematically shows a perspective view of a capacitor according to the state of the art,
Figure 3 schematically shows a perspective view of a capacitor according to one embodiment,
Figure 4 schematically shows a perspective view of a capacitor according to a further embodiment,
Figures 5a to 5d schematically show a perspective view / top view of the capacitor according to Figure 4,
Figure 6 schematically shows a perspective view of a capacitor according to one embodiment,
Figure 7 schematically shows a perspective view of a capacitor according to one embodiment,
Figure 8 schematically shows a perspective view of a capacitor according to one embodiment,
Figures 9a to 9d schematically show a perspective view / top view of a capacitor according to a further embodiment,
Figure 10 schematically shows a perspective view of a capacitor according to one embodiment,
Figures 11a to 11d schematically show a perspective view / top view of a capacitor according to a further embodiment,
Figures 12a schematically shows a perspective view of a capacitor according to a further embodiment,
Figures 12b schematically shows a perspective view of a capacitor according to a further embodiment,
Figures 13a to 13d schematically show a perspective view / top view of a capacitor according to Figure 12b,
Figures 14a to 14e schematically show a perspective view / top view of a capacitor according to Figure 12b,
Figures 15a to 15d schematically show a perspective view / top view of a capacitor according to a further embodiment,
Figures 16a to 16d schematically show a perspective view / top view of a capacitor according to a further embodiment,
Figure 17 schematically shows a perspective view of a capacitor according to one embodiment,
Figures 18a to 18d schematically show a perspective view / top view of a capacitor according to Figure 17,
Figure 19 schematically shows a perspective view of a capacitor according to one embodiment,
Figures 20a to 20d schematically show a perspective view / top view of a capacitor according to Figure 19.
Figures 21, 22, 23 and 24 show an alternative design of the embodiment shown in Figures 16a, 16b, 16c and 16d.

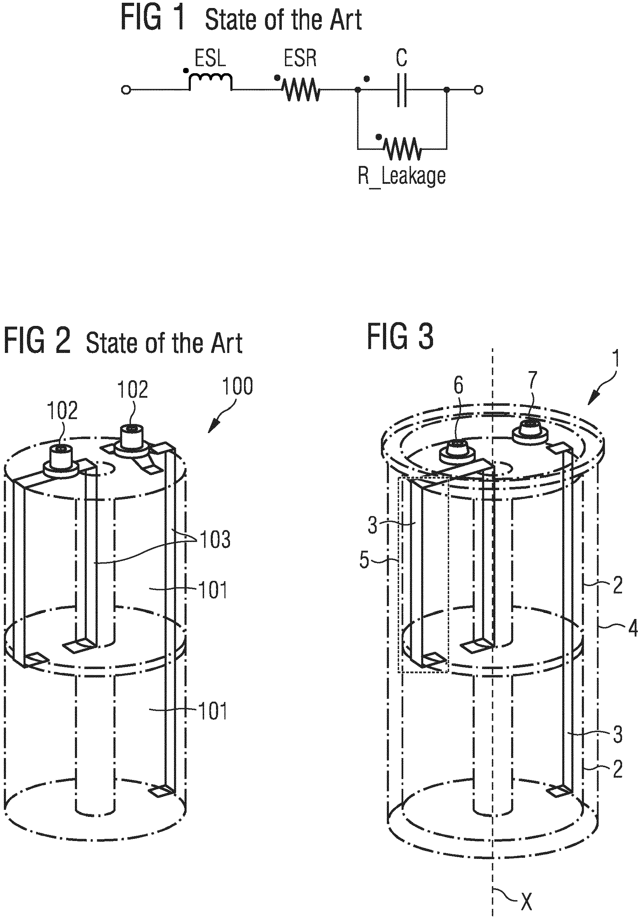

Figures 1 and 2 are related to a capacitor according to the state of the art. In Figure 2 a conventional cylindrical film capacitor 100 is shown. The capacitor 100 comprises two internal wound winding elements 101 which are connected in parallel. The winding elements 101 are connected to one pair of external terminals 102 by means of connection stripes 103. All winding elements 101 have the same height.

Figure 1 shows an equivalent electrical model of a film capacitor according to the state of the art, e.g. capacitor 100. As can be seen from Figure 1, the capacitor 100 has parasitic components. In particular, the ESL of the capacitor 100 is due to parasitic self-inductance of the terminals 102, parasitic self-inductance of the winding elements 101 including the intrinsic parasitic self-inductance and the self-inductance obtained due to the connection between the winding elements 101 and the terminals 102 by the connection stripes 103.

In order to work correctly in high frequency applications, the parasitic inductance and/or resistance of the capacitor has to be reduced.

Figure 3 schematically shows a perspective view of a capacitor 1 according to a first embodiment.

The capacitor 1 is a round or cylindrical film capacitor. The capacitor 1 is adapted to be used in high frequency applications. The capacitor 1 comprises in this embodiment two internally wound winding elements 2. Of course, the capacitor 1 can comprise more than two winding elements 2, e.g. three, four, five or more winding elements 2.

The winding elements 2 are connected in parallel. The winding elements 2 are connected to a pair of external terminals 6, 7 by means of connecting elements 3, e.g. connection stripes. In particular, each winding element 2 is connected to a pair of connecting elements 3 with opposite polarity. In alternative embodiments, it could also be a different connection. For example, the respective winding element 2 could be connected to two connection stripes 3 of pole A and one connection stripe 3 of pole B. In other words, the respective winding element 2 is not necessarily connected to exactly one pair of connecting elements 3.

The capacitor 1 comprises a cylindrical housing 4. The housing 4 comprises metal. Preferably, the housing 4 comprises aluminum. The winding elements 2 and connecting elements 3 are arranged in an interior of the housing 4.

In this embodiment, one of the connecting elements 3 is arranged closest possible to an inner surface of the housing 4. In other words, a distance of said connecting element 3 to the inner housing wall is reduced as compared to conventional capacitors. For example, the distance between the said connecting element 3 and the inner surface of the housing is between 0.5 mm and 2 mm.

Moreover, the said connecting element 3 is arranged parallel to the housing 4, in particular to the inner surface of the housing 4. The connecting element 3 is arranged parallel to a main longitudinal axis x of the housing 4 / the capacitor 1. Due to the specific arrangement of the said connecting element 3, an electromagnetic coupling 5 is established between the housing 4 and said connecting element 3.

In the embodiment according to Figure 3, a connecting element 3 belonging to the winding element 2 which is arranged closest to the terminals 6, 7 (top winding element) is arranged as close as possible to the housing 4. Of course, other connecting elements 3, e.g. a connecting element 3 belonging to that winding element 2 which is furthest away from the terminals 6, 7, can be arranged in the manner described above, as well. Of course, more than one connecting element 3 can be arranged closest possible to the housing 4. For example, two, three, ore more connecting elements 3 can be arranged in this way.

The connecting element 3 close to the metallic housing 4 is electromagnetically coupled with it, producing eddy currents on the housing 4 with a direction opposite to the current flowing through the connecting element 3. Consequently, the electromagnetic flux created by the current flowing through the connecting element 3 is partially cancelled, reducing the parasitic self-inductance of the connecting element 3 and, as a consequence, the capacitor ESL is reduced. Accordingly, in this embodiment, the metallic housing 4 is used for strongly reducing the ESL of the capacitor 1.

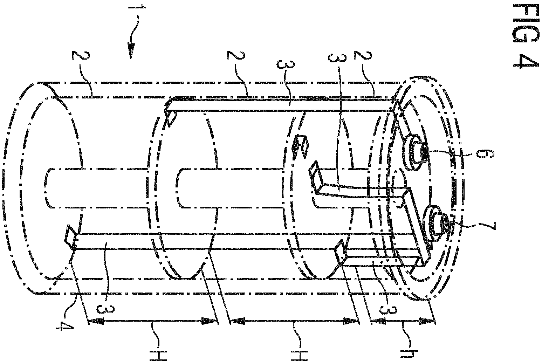

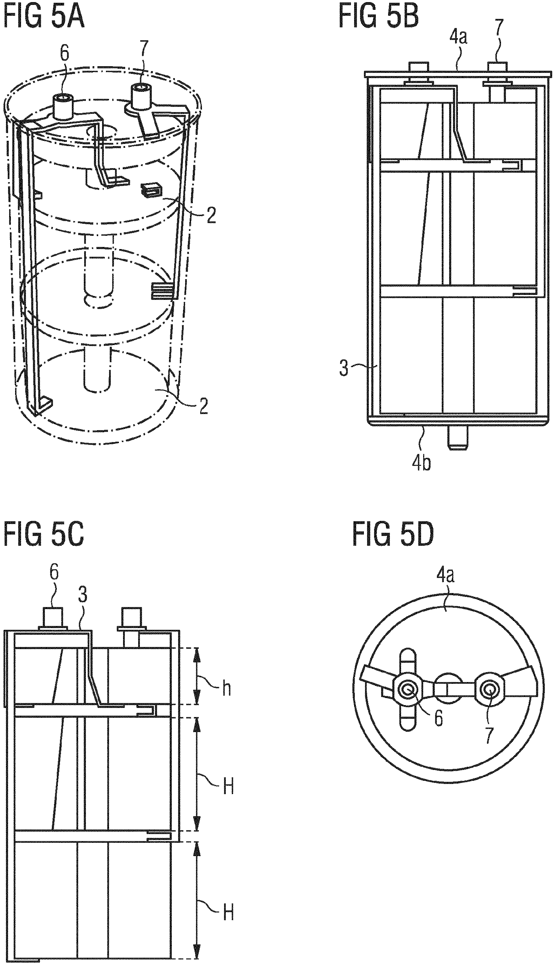

Figures 4 and 5a to 5d show a capacitor 1 according to a further embodiment. The capacitor 1 comprises winding elements 2, connecting elements 3, terminals 6, 7 and a housing 4 as described in connection with the capacitor 1 according to Figure 3. The terminals 6, 7, protrude from an upper surface 4a of the housing 4 (see, in particular, Figures 5b and 5d). Moreover, also in this embodiment, at least one of the connecting elements 3 can (but does not have to) be arranged closest possible to the housing 4 as described above for reducing the ESL of the capacitor 1.

In addition, for reducing the ESL, the capacitor 1 comprises winding elements 2 with different heights. In particular, the winding element 2 closest to the terminals 6, 7 (so-called "top winding element") has a lower height h as compared to the further winding elements 2, which have a height H (see, in particular Figures 4 and 5c). For example, the height h amounts to 15% - 85% of the height H of the further winding elements 2. In this context, the term height denotes the extension of a winding element 2 along the main longitudinal axis X of the capacitor 1.

As a consequence of the reduced height h, the parasitic self-inductance of the top winding element 2 is reduced. Moreover, the length of its connecting elements 3 (electrical connections between top winding element 2 and the terminals 6, 7) is reduced. Therefore, since the winding elements 2 are connected in parallel and the inductance with the lowest self-inductance is the dominant one, the capacitor ESL is highly reduced.

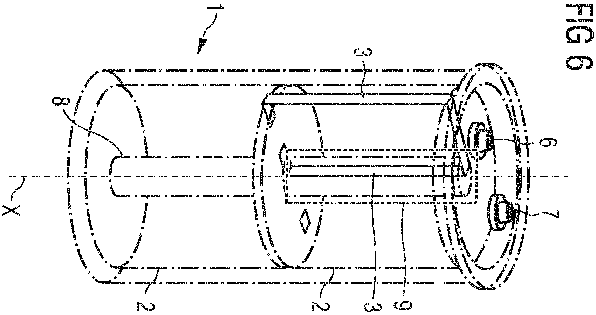

Figure 6 shows a capacitor 1 according to a further embodiment. The capacitor 1 comprises winding elements 2, connecting elements 3, terminals 6, 7 and a housing 4 as described in connection with the capacitor 1 according to Figure 3. The winding elements 2 have a core 8, i.e. an inner hollow region which extends through the winding elements 2 along the main longitudinal axis X.

Moreover, also in this embodiment, at least one of the connecting elements 3 can (but does not have to) be arranged closest possible to the housing 4 as described above for reducing the ESL of the capacitor 1.

Furthermore, (at least) one pair of connecting elements 3 belonging to different winding elements 2 and having opposite polarities are arranged in the core 8 of at least one winding element 2. Said pair of connecting elements 3 is arranged parallel to one another. The distance between these two connecting elements 3 is such small that the said connecting elements 3 overlap in the core region (see overlap region 9). For example, the distance between these two connecting elements 3 is between 0.1 mm and 3 mm.

Of course, also more than one pair of connecting elements 3 can be arranged in that way, e.g. two pairs or three pairs, the maximum number depending on the number of winding elements.

In each pair of connecting elements 3 arranged like this, the electromagnetic flux created by the current flowing through the connecting elements 3 is partially cancelled, reducing the parasitic self-inductance of the connecting elements 3. As a consequence, the capacitor ESL is reduced.

In an alternative embodiment not shown in Figure 6, (at least) one pair of connecting elements 3 belonging to one winding element 2 and having opposite polarities may be arranged in the core 8 of at least one winding element 2.

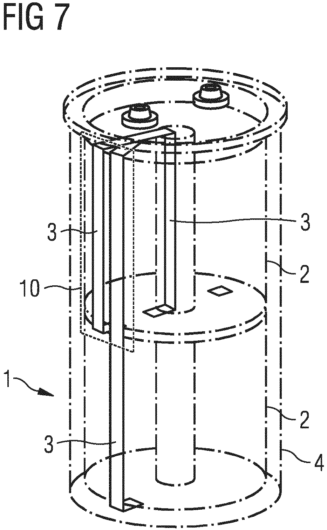

Figure 7 shows a capacitor 1 according to a further embodiment. The capacitor 1 comprises winding elements 2, connecting elements 3, terminals 6, 7 and a housing 4 as described in connection with the capacitor 1 according to Figure 3. In this embodiment, the housing 4 is again used for reducing the capacitor ESL as described in connection with Figure 3.

In the embodiment according to Figure 7, (at least) one pair of connecting elements 3 belonging to different winding elements 2 and having opposite polarity are arranged closest possible to the housing 4, in particular to the inner surface of the housing 4. Both connecting elements 3 are arranged at the same distance with respect to the housing 4. The distance between each of the two connecting elements 3 and the inner surface of the housing 4 may be between 0.5 mm and 2 mm.

The said connecting elements 3 extend parallel to the housing 4, i.e. parallel to the main longitudinal axis X. Moreover, the two connecting elements 3 are arranged as close to one another as possible. For example, a distance between the two connecting elements 3 may be between 0.1 mm and 3 mm. Consequently, the two connecting elements 3 overlap.

Of course, also more than one pair of connecting elements 3 can be arranged in that way, e.g. two pairs or three pairs, the maximum number depending on the number of winding elements.

Each pair of connecting elements 3 is electromagnetically coupled to the metallic housing (see electromagnetic coupling 10). This produces eddy currents on the housing 4 with a direction opposite to the current flowing through the connecting elements 3. In this way, the electromagnetic flux created by the current flowing through the connecting elements 3 is partially cancelled, reducing the parasitic self-inductance of the connecting elements 3. Consequently, the capacitor ESL is reduced.

In an alternative embodiment not shown in Figure 7, (at least) one pair of connecting elements 3 belonging to the same winding element 2 and having opposite polarity are arranged closest possible to the housing 4, in particular to the inner surface of the housing 4.

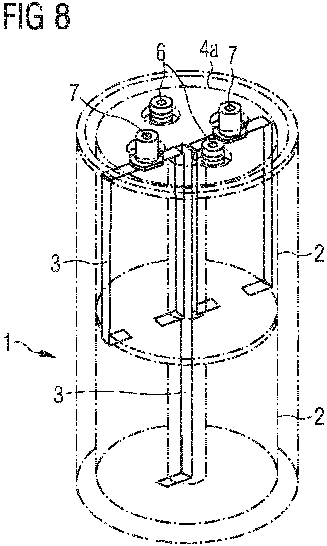

Figure 8 shows a capacitor 1 according to a further embodiment. The capacitor 1 comprises winding elements 2, connecting elements 3 and a housing 4 as described in connection with the capacitor 1 according to Figure 3.

Again, at least one of the connecting elements 3 can (but does not have to) be arranged closest possible to the housing 4 (electromagnetic coupling of housing 4 and connecting element 3) as described above for reducing the ESL of the capacitor 1.

In addition to that, for (further) reducing the capacitor ESL/ESR, one pair of connecting elements 3 belonging to different winding elements 2 or to one winding element 2 and having opposite polarities can be arranged in the core 8 of at least one winding element 2 so that they overlap as already described in connection with Figure 6.

Moreover, the capacitor comprises two pairs of external terminals 6, 7. In other words, the capacitor 1 comprises two first terminals 6 and two second terminals 7. The first and second terminals 6, 7 have opposite polarity. The first terminals 6 have polarity A and the second terminals 7 have polarity B or vice versa.

The terminals 6, 7 are arranged circular on the upper surface 4a of the housing 4. The terminals 6, 7 are arranged so that one terminal 6, 7 is always followed by another terminal 7, 6 with opposite polarity. In particular, the two pairs of terminals 6, 7 are arranged in a polarity circular layout A-B-A-B. Terminals 6, 7 with the same polarity are connected internally.

In this way, the cross section of the terminals 6, 7 is increased and electrical distances from the input (top of the terminals 6, 7, where they are connected to the outside) to the connecting elements 3 and winding elements 2 are reduced. Therefore, the parasitic self-inductances from the input to the connecting elements 3 and winding elements 2 are reduced. As a consequence, the capacitor ESL and ESR is reduced.

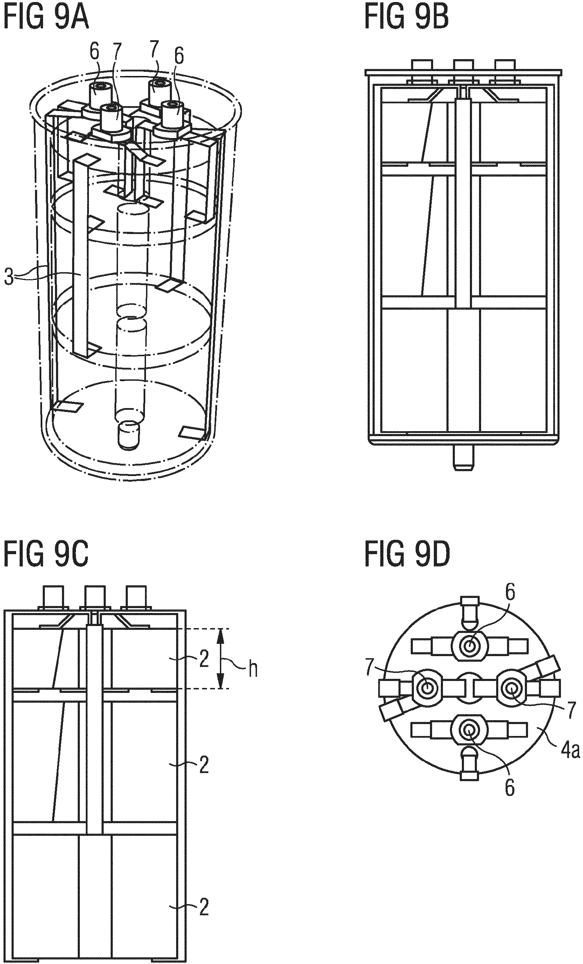

Figures 9a to 9d show a capacitor 1 according to a further embodiment. Here, the embodiments according to Figures 3, 4 and 8 are combined to strongly reduce the ESL and ESR of the capacitor 1. This means that
i) (at least) one of the connecting elements 3 is arranged closest possible to the inner surface of the housing 4 such that the connecting element 3 and the housing 4 are electromagnetically coupled (see, in particular Figure 9a),
ii) the height h of the top winding element 2 is reduced as compared to the height H of the further winding elements 2 (see, in particular, Figure 9c),
iii) two pairs of terminals 6, 7 are provided which are arranged in a polarity circular layout A-B-A-B, wherein terminals 6, 7 with the same polarity are connected internally (see, in particular, Figure 9d which shows a top view of the capacitor 1 with the terminals 6, 7 arranged in a circular way on the upper surface 4a of the housing 4).

In combination, these features i) to iii) ensure that the ESL of the capacitor 1 is strongly reduced.

Figure 9d further illustrates the connection of the terminals 6, 7 with the connecting elements 3 for connecting the winding elements 2 in parallel. Terminals with same polarity are connected internally.

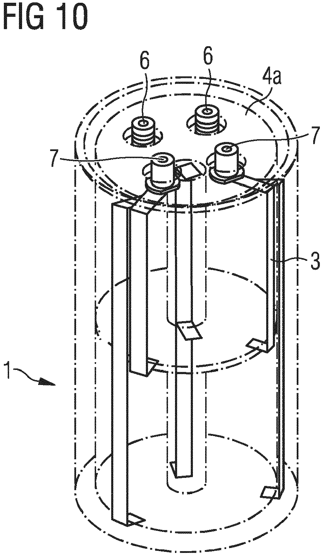

Figure 10 shows a capacitor 1 according to a further embodiment. The capacitor 1 comprises winding elements 2, connecting elements 3 and a housing 4 as described in connection with the capacitor 1 according to Figure 3.

Again, (at least) one of the connecting elements 3 can (but does not have to) be arranged closest possible to the housing 4 (electromagnetic coupling of housing 4 and connecting element 3) as described above for reducing the ESL of the capacitor 1. Additionally or alternatively, (at least) one pair of connecting elements 3 belonging to different winding elements 2 and having opposite polarity can be arranged closest possible to the housing 4, in particular to the inner surface of the housing 4 so that they are electromagnetically coupled with the housing 4 as described in connection with Figure 7. Additionally or alternatively, (at least) one pair of connecting elements 3 belonging to one winding element 2 and having opposite polarity can be arranged closest possible to the housing 4, in particular to the inner surface of the housing 4 so that they are electromagnetically coupled with the housing 4 as described in connection with Figure 7.

For (further) reducing the capacitor ESL, one pair of connecting elements 3 belonging to different winding elements 2 and having opposite polarities can also be arranged in the core 8 of at least one winding element 2 so that they overlap as already described in connection with Figure 6. Additionally or alternatively, for (further) reducing the capacitor ESL, one pair of connecting elements 3 belonging to one winding element 2 and having opposite polarities can also be arranged in the core 8 of at least one winding element 2 so that they overlap as already described in connection with Figure 6.

In addition to that, the capacitor comprises two pairs of external terminals 6, 7, i.e. two first terminals 6 and two second terminals 7. The first and second terminals 6, 7 have opposite polarity. The first terminals 6 have polarity A and the second terminals 7 have polarity B or vice versa.

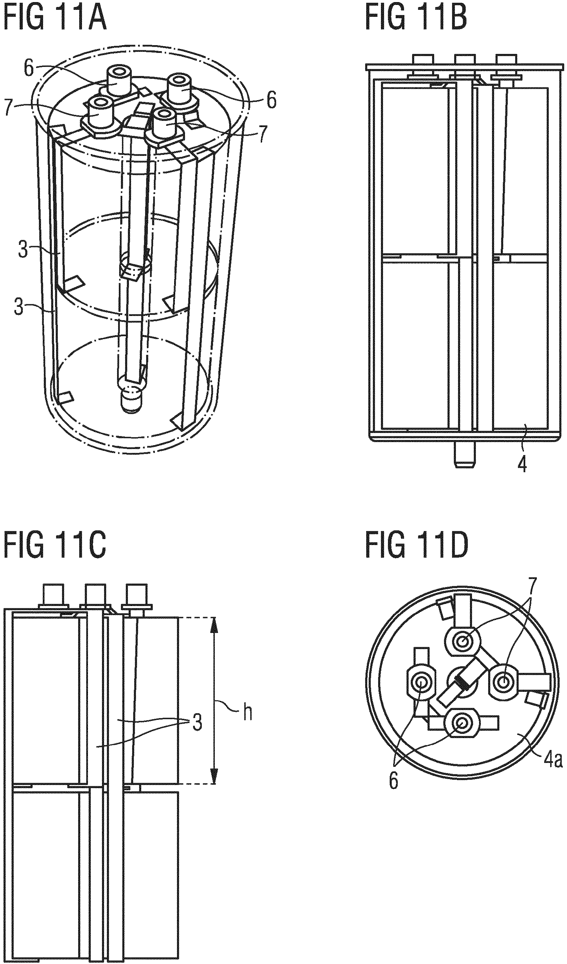

The terminals 6, 7 are arranged circular on the upper surface 4a of the housing 4 (see also Figures 11a and 11d). The terminals 6, 7 are arranged so that one terminal 6, 7 is followed by one terminal 6, 7 with same polarity. In particular, the two pairs of terminals 6, 7 are arranged in a polarity circular layout A-A-B-B. Terminals 6, 7 with the same polarity are connected internally.

Due to the specific arrangement of the terminals 6, 7 the cross section of the terminals 6, 7 is increased and electrical distances from the input to the connecting elements 3 and winding elements 2 are reduced. Therefore, the parasitic self-inductances from the input to the connecting elements 3 and winding elements 2 are reduced. As a consequence, the capacitor ESL and ESR is further reduced.

Figures 11a to 11d show a capacitor 1 according to a further embodiment. Here, the embodiments according to Figures 3, 4, 7 and 10 are combined to strongly reduce the ESL of the capacitor 1. This means that
- (at least) one pair of connecting elements 3 belonging to different winding elements 2, or to the same winding element 2, and having opposite polarity are arranged closest possible to the housing 4, in particular to the inner surface of the housing 4 such that the pair of connecting elements 3 and the housing 4 are electromagnetically coupled (see, in particular Figure 11a),
- additionally, a further (single) connecting element 3 can be arranged closest possible to the housing 4 for being electromagnetically coupled with the housing 4,
- the height h of the top winding element 2 is reduced as compared to the height H of the further winding elements 2 (see, in particular, Figure 11c),
- two pairs of terminals 6, 7 are provided which are arranged in a polarity circular layout A-A-B-B, wherein terminals 6, 7 with the same polarity are connected internally (see, in particular, Figure 11d which shows a top view of the capacitor 1 with the terminals 6, 7 arranged in a circular way on the upper surface of the housing 4).

In combination, these features ensure that the ESL of the capacitor 1 is strongly reduced.

Figure 11d further illustrates the connection of the terminals 6, 7 with the connecting elements 3 for connecting the winding elements 2 in parallel. Terminals 6, 7 with same polarity are connected internally.

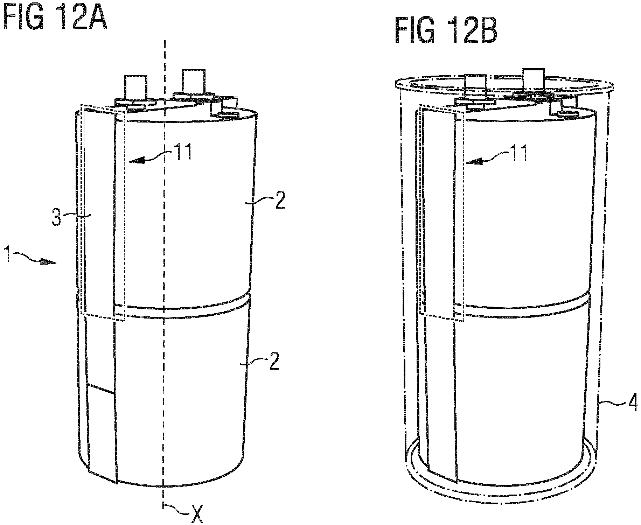

Figure 12a shows a capacitor 1 according to a further embodiment. The capacitor 1 comprises winding elements 2, connecting elements 3, terminals 6, 7 and a housing 4. In this embodiment, (at least) one pair of connecting elements 3 with opposite polarities and belonging to different winding elements 2 are arranged on the lateral of at least one winding element 2. In other words, the pair of connecting elements 3 extends along an outer side of the winding element 2. The pair of connecting elements 3 extends parallel to the main longitudinal axis X.

This pair of connecting elements 3 is arranged with parallel orientation. Moreover, the distance between the two connecting elements 3 is reduced as much as possible so that they overlap (see overlap region 11). For example, the distance between the two connecting elements 3 may be between 0.1 mm and 3 mm.

Of course, also more than one pair of connecting elements 3 can be arranged in that way, e.g. two pairs or three pairs, the maximum number depending on the number of winding elements.

In each pair of connecting elements 3, the electromagnetic flux created by the current flowing through the connecting elements 3 is partially cancelled, reducing the parasitic self-inductance of the connecting elements 3. As a consequence, the capacitor ESL is reduced.

In an alternative embodiment not shown in Figure 12a, (at least) one pair of connecting elements 3 with opposite polarities and belonging to the same winding elements 2 are arranged on the lateral of at least one winding element 2.

Figures 12b, 13a to 13d and 14a to 14e show a capacitor 1 according to a further embodiment. Here, the embodiments according to Figures 3 and 12a are combined. In particular, the (at least one) pair of connecting elements 3 which are arranged on the lateral of at least one winding element 2 (see overlap region 11) is arranged as close to the housing 4 as possible so that the pair of connecting elements 3 and the housing 4 are electromagnetically coupled. Moreover, the pair of connecting elements 3 is arranged parallel to the inner surface of the housing 4, i.e. parallel to the main longitudinal axis X.

In this way, the effect described in connection with Figure 12a is amplified and the capacitor ESL is strongly reduced.

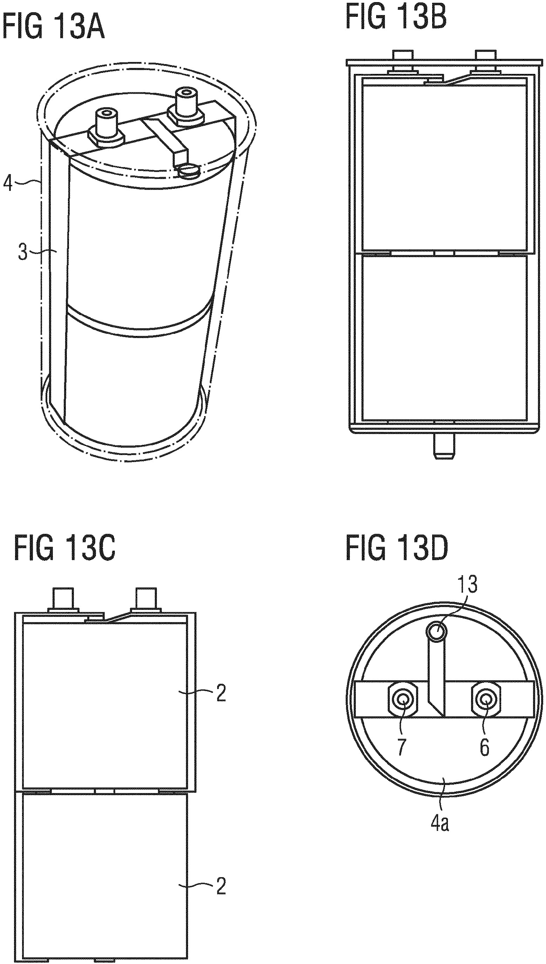

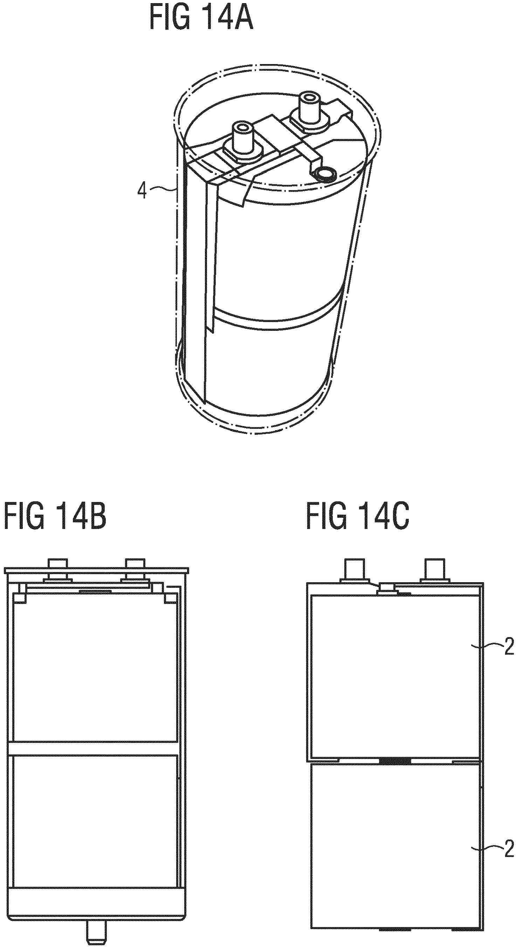

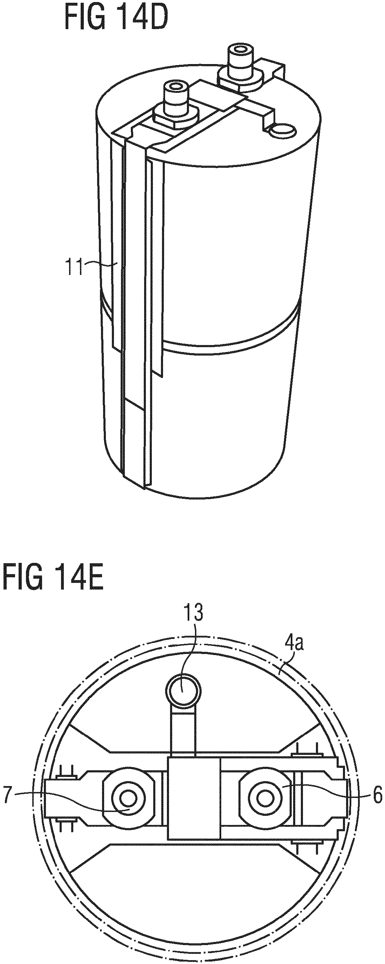

Figure 13d and 14e additionally show a connection point 13 on the upper surface 4a of the housing. The connection point is a soldering point in this embodiment.

The connection point 13 assures a good contact between connecting elements 3, which are formed by connection stripes, and the respective winding element 2. In the Figures, a connection point 13 between connecting elements 3 and the uppermost winding element 2 is shown. However, all connections between one of the connecting elements 3 and one of the winding elements 2 can comprise connection points 13 and may be formed by soldering, i.e. all connections may comprise a soldering point forming the respective connection point 13. Alternatively, some or all connections between one of the connecting elements 3 and one of the winding elements 2 can be formed by welding. In this case, the connection point 13 is a welding point.

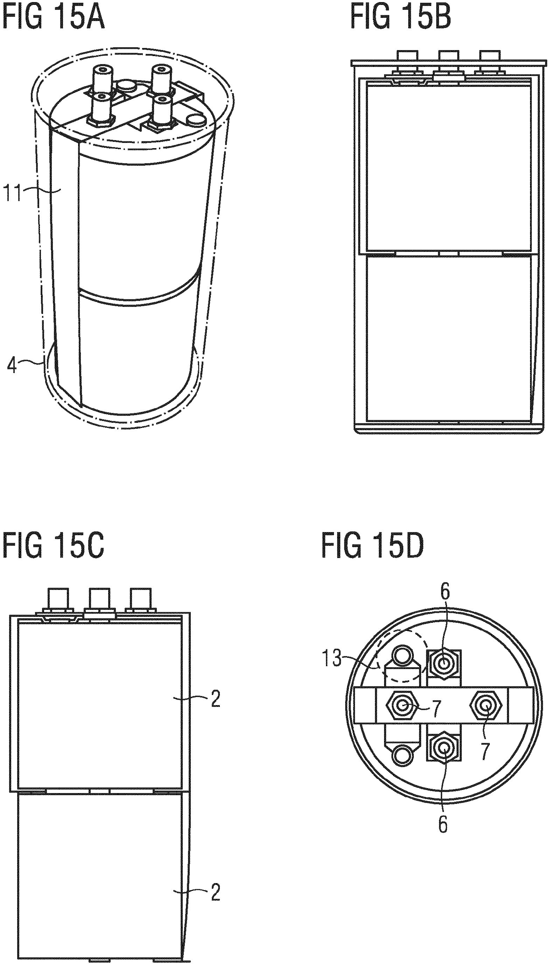

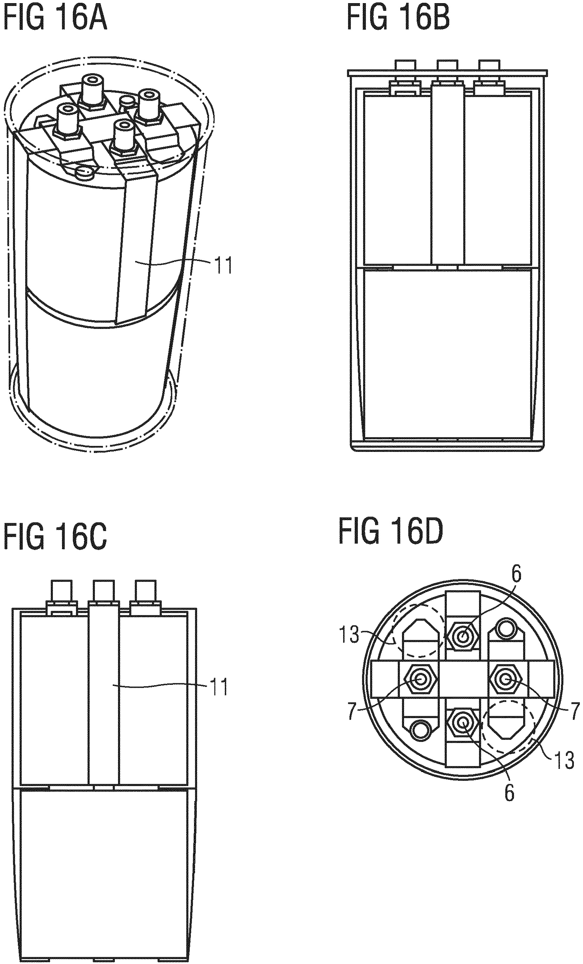

Figures 15a to 15d and 16a to 16d show a capacitor 1 according to a further embodiment. Here, the embodiments according to Figures 3, 8, 12a and/or 12b are combined to further reduce the ESL / ESR of the capacitor. In particular:
- (at least) one pair of connecting elements 3 with opposite polarities and belonging to different winding elements 2, or belonging to the same winding element 2, are arranged on the lateral of at least one winding element 2. Their distance is minimized so that they overlap (overlap region 11), as discussed in connection with Figure 12a.
   - The pair of connecting elements 3 can be arranged parallel to the housing 4 and as close to the housing 4 as possible so that the pair of connecting elements 3 and the housing 4 are electromagnetically coupled (see Figure 12b).
   - two pairs of terminals 6, 7 are provided which are arranged in a polarity circular layout A-B-A-B, wherein terminals 6, 7 with the same polarity are connected internally (see, in particular, Figure 15d which shows a top view of the capacitor 1 with the terminals 6, 7 arranged in a circular way on the upper surface 4a of the housing 4).

By combining the different embodiments, the capacitor ESL and ESR are strongly reduced.

Figure 15d further shows connection points 13 on the upper surface 4a of the housing 4 for fixing a copper strip to the upper surface 4a. This may help to fix the connecting elements 3 to the terminals 6, 7. In this embodiment, two connection points 13 formed by soldering are shown. However, also embodiments with one connection point 13 are possible. For example the encircled connection point 13 may be omitted. In Figure 16d two soldering points 13 are shown. However, in some embodiments also three or four connection points 13 may be possible, which is highlighted by the circles in Figure 16d.

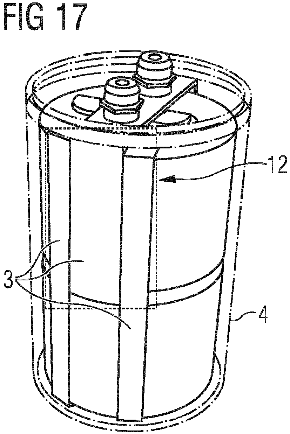

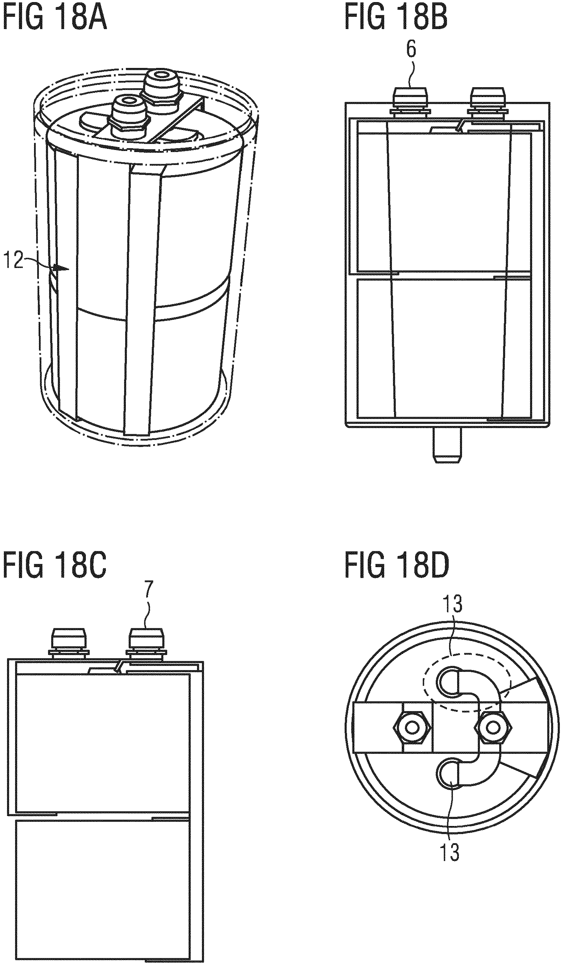

Figure 17 and 18a to 18d show a capacitor 1 according to a further embodiment. The capacitor 1 comprises winding elements 2, connecting elements 3, terminals 6, 7 and a housing 4.

In this embodiment, (at least) one trio of the connecting elements 3 with opposite polarities (A-B-A) and belonging to different winding elements 2 are arranged as close as possible to the housing 4. The three connecting elements 3 are located at the same distance to the housing 4. For example, a distance between each of the three connecting elements 3 and the inner surface of the housing 4 is between 0.5 mm and 2 mm. The three connecting elements 3 and the housing 4 are, thus, electromagnetically coupled (see electromagnetic coupling 12). In other words, also in this embodiment, the metallic housing 4 is used for reducing the capacitor ESL.

The three connecting elements 3 are arranged parallel to the inner surface of the housing 4. Moreover, the three connecting elements 3 are arranged very close to one another. For example, a distance between the three connecting elements 3 may be 0.1 mm to 3 mm. The three connecting elements 3 overlap one another.

Each trio of connecting elements 3 is electromagnetically coupled by the metallic housing 4, producing eddy currents on the housing 4 with a direction opposite to the direction of the current flowing through the connecting elements 3. Accordingly, the electromagnetic flux created by the current flowing through the connecting elements 3 is partially cancelled, reducing the parasitic self-inductance of the connecting elements 3. Thus, the capacitor ESL is reduced.

Figure 18d further shows the previously mentioned connection points 13 on the upper surface 4a of the housing 4. In this embodiment, two connection points 13 are shown. However, also embodiments with one connection point 13 are possible. For example, the encircled connection point 13 may be omitted.

In an alternative embodiment, (at least) one trio of the connecting elements 3 with opposite polarities (A-B-A) and belonging to the same winding elements 2 are arranged as close as possible to the housing 4.

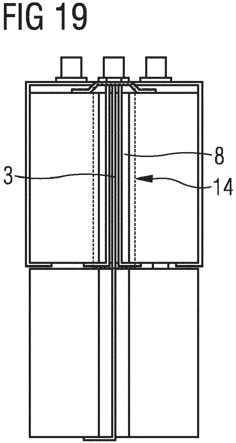

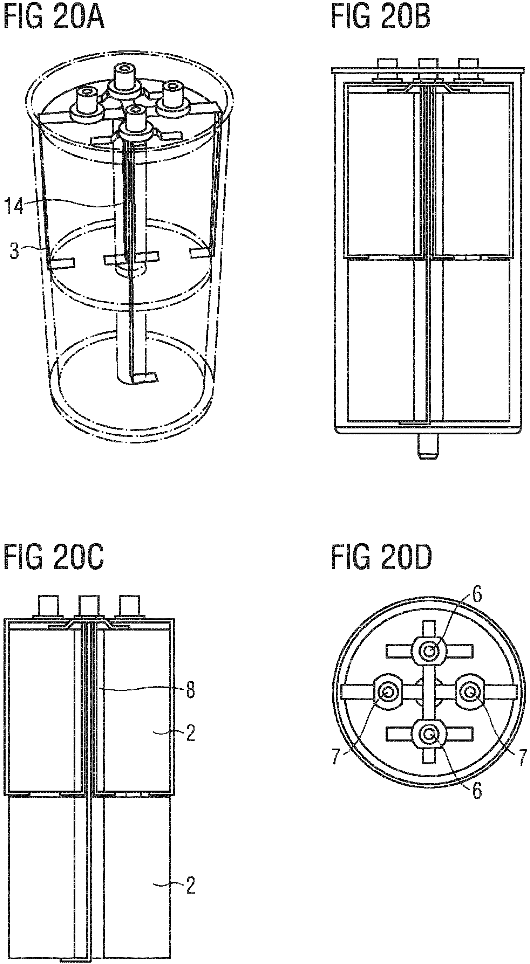

Figure 19 and 20a to 20d show a capacitor 1 according to a further embodiment. The capacitor 1 comprises winding elements 2, connecting elements 3 and a housing 4.

Again, (at least) one of the connecting elements 3 can (but does not have to) be arranged closest possible to the housing 4 (electromagnetic coupling of housing 4 and connecting element 3) as described above for reducing the ESL of the capacitor 1 (see Figure 3).

In addition to that, two pairs of terminals 6, 7 are provided which are arranged in a polarity circular layout A-B-A-B, wherein terminals 6, 7 with the same polarity are connected internally (see also Figure 8). In this way, capacitor ESL is further reduced.

Moreover, (at least) one trio of the connecting elements 3 with opposite polarities (A-B-A) and belonging to different winding elements 2 are arranged in the core 8 of at least one winding element 2. In other words, the trio is arranged in the hollow inner region of at least one winding element 2. The said connecting elements 3 are arranged parallel with respect to one another.

The three connecting elements 3 are arranged as close as possible to one another. For example, a distance between the three connecting elements 3 may be 0.1 mm to 3 mm. The three connecting elements 3 overlap one another (see overlap region 14).

In each trio of connecting elements 3, the electromagnetic flux created by the current flowing through the connecting elements 3 is partially cancelled. Thus, the parasitic self-inductance of the connecting elements 3 is reduced, and, as a consequence, the capacitor ESL is reduced.

Altogether, by the combination of the embodiments, the capacitor ESL is further reduced.

In an alternative embodiment, (at least) one trio of the connecting elements 3 with opposite polarities (A-B-A) and belonging to the same winding elements 2 are arranged in the core 8 of at least one winding element 2.

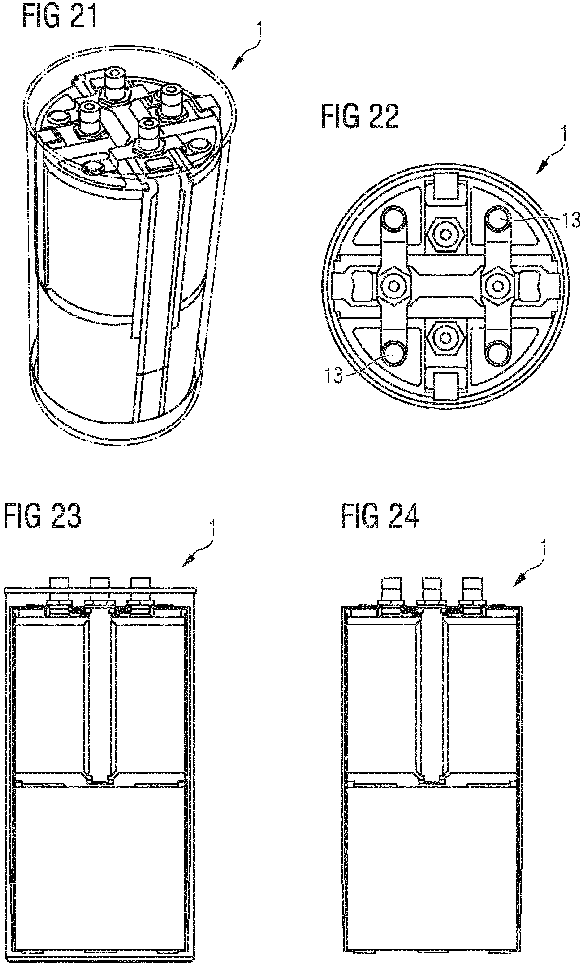

Figures 21, 22, 23 and 24 show an alternative design of the embodiment shown in Figures 16a, 16b, 16c and 16d. According to one design change, in the alternative design shown in Figures 21, 22, 23 and 24, four connection points 13 are formed on the upper surface of the housing.

### Reference numerals

- 1: Capacitor
- 2: Winding element
- 3: Connecting element
- 4: Housing
- 4a: Upper surface
- 4b: Lower surface
- 5: Electromagnetic coupling
- 6,7: Terminal
- 8: Core
- 9: Overlap region
- 10: Electromagnetic coupling
- 11: Overlap region
- 12: Electromagnetic coupling
- 13: Connection point
- 14: Overlap region

- H: Height
- h: Height

- 100: Capacitor
- 101: Winding element
- 102: Terminal
- 103: Connection stripe

## Claims

1. Capacitor (1) for high frequency applications comprising
- at least two winding elements (2),
- a plurality of connecting elements (3) connecting the winding elements (2) in parallel to each other, wherein each winding element (2) is connected at least to a pair of connecting elements (3) with opposite polarity,
wherein the capacitor (1) has a reduced ESL and/or ESR as compared to conventional capacitors (1).

2. Capacitor (1) according to claim 1,
further comprising a metallic housing (4), wherein the winding elements (2) are arranged in the housing (4), wherein at least one of the connecting elements (3) is located as close to an inner surface of the housing (4) as possible and wherein the at least one connecting element (3) is arranged parallel to the inner surface of the housing (4).

3. Capacitor (1) according to claim 2,
wherein a distance between the inner surface of the housing (4) and the at least one connecting element (3) is between 0.5 mm and 2 mm.

4. Capacitor (1) according to claim 2 or claim 3,
wherein the housing (4) and the at least one of the connecting elements (3) are electromagnetically coupled with one another.

5. Capacitor (1) according to any of the previous claims,
further comprising at least two terminals (6, 7) for electrically connecting the capacitor (1), wherein the winding element (2) which is arranged closest to the terminals (7, 8) comprises a height (h) which is smaller than a height (H) of the further winding elements (2).

6. Capacitor (1) according to any of the previous claims,
wherein at least one pair of connecting elements (3) from different winding elements (2) with opposite polarities are located in a core (8) of at least one winding element (2) with parallel orientation, wherein a distance between the pair of connecting elements (3) is reduced such said pair of connecting elements (3) overlap
and/or
wherein at least one pair of connecting elements (3) from one winding element (2) with opposite polarities are located in a core (8) of at least one winding element (2) with parallel orientation, wherein a distance between the pair of connecting elements (3) is reduced such said pair of connecting elements (3) overlap.

7. Capacitor (1) according to claim 6,
wherein the distance between the two connecting elements (3) is between 0.1 mm and 3 mm.

8. Capacitor (1) according to claim 2,
wherein at least one pair of connecting elements (3) from different winding elements (2) with opposite polarities are located as close as possible to the housing (4) and parallel to it
and/or
wherein at least one pair of connecting elements (3) from one winding element (2) with opposite polarities are located as close as possible to the housing (4) and parallel to it.

9. Capacitor (1) according to claim 8,
wherein the at least one pair of connecting elements (3) are located at the same distance to the inner surface of the housing (4) and with the lowest possible distance between each other.

10. Capacitor (1) according to any of the previous claims,
further comprising two pairs of terminals (6, 7) for electrically connecting the capacitor (1), wherein the two pairs of terminals (6, 7) comprise a polarity circular layout A-B-A-B, and wherein terminals (6, 7) with same polarity are connected internally.

11. Capacitor (1) according to any of claims 1 to 9,
further comprising two pairs of terminals (6, 7) for electrically connecting the capacitor (1), wherein the two pairs of terminals (6, 7) comprise a polarity circular layout A-A-B-B, and wherein terminals (6, 7) with same polarity are connected internally.

12. Capacitor (1) according to any of the previous claims,
wherein at least one pair of connecting elements (3) from different winding elements (2) with opposite polarities are located on the lateral of at least one winding element (2) with parallel orientation, and wherein a distance between the two connecting elements (3) is as small as possible such that the connecting elements (3) overlap,
and/or
wherein at least one pair of connecting elements (3) from one winding element (2) with opposite polarities are located on the lateral of at least one winding element (2) with parallel orientation, and wherein a distance between the two connecting elements (3) is as small as possible such that the connecting elements (3) overlap.

13. Capacitor (1) according to claim 12,
wherein the distance between the two connecting elements (3) is between 0.1 mm and 3 mm.

14. Capacitor (1) according to claim 12 or claim 13,
wherein a distance between an inner surface of a housing (4) and the two connecting elements (3) is between 0.5 mm and 2 mm and wherein both connecting elements (3) are arranged parallel to the housing (4).

15. Capacitor (1) according to claim 2,
wherein at least one trio of the connecting elements (3) from different winding elements (2) with opposite polarities A-B-A are located as close as possible to the housing (4) and parallel to it,
and/or
wherein at least one trio of the connecting elements (3) from one winding element (2) with opposite polarities A-B-A are located as close as possible to the housing (4) and parallel to it.

16. Capacitor (1) according to claim 15,
wherein the three connecting elements (3) are located at the same distance to the inner surface of the housing (4) and with the lowest possible distance with respect to one another.

17. Capacitor (1) according to any of the previous claims,
wherein at least on trio of the connecting elements (3) from different winding elements (2) with opposite polarities A-B-A are located in a core (8) of at least one winding element (2) with parallel orientation, and wherein a distance between them is reduced as much as possible such that said connecting elements (3) overlap,
and/or
wherein at least on trio of the connecting elements (3) from one winding element (2) with opposite polarities A-B-A are located in a core (8) of at least one winding element (2) with parallel orientation, and wherein a distance between them is reduced as much as possible such that said connecting elements (3) overlap.

18. Capacitor (1) according to claim 17,
wherein the distance between the three connecting elements (3) is between 0.1 mm and 3 mm.

19. Use of a capacitor (1) according to any of the previous claims in high frequency applications.
